# DEMANDE DE BREVET EUROPEEN

(11) **EP 4 806 262 A1**
(43) Date de publication de la demande: **16.09.2026**
(21) Numéro de dépôt: 26164143.5
(22) Date de dépôt: 12.03.2026
(51) Int. Cl.: A01K 5/02, A01K 5/00, A01F 25/20

(54) **MACHINE AGRICOLE AUTONOME ET AUTOMOTRICE ET PROCÉDÉ DE CONTRÔLE DE L'ENVIRONNEMENT D'UNE TELLE MACHINE**

(30) Priorité: 13.03.2025 FR 2502527
(71) Demandeur: Kuhn-Audureau SAS, 85260 La Copechagnière (FR)
(72) Inventeur: GOUARD, Stéphane, 44115 HAUTE-GOULAINE (FR); GUIDAULT, Léandre, 85000 LA ROCHE-SUR-YON (FR)

(57) **Abrégé**

La machine agricole autonome et automotrice de la présente invention est conçue pour se positionner de manière autonome devant un tas de produit d'alimentation animale pour le prélèvement. Elle comprend un convoyeur (1) parallèle à l'axe longitudinal de la machine, avec une tête de prélèvement (1a) et réglable verticalement, permettant le prélèvement et le chargement du produit. La machine est équipée d'un dispositif de protection (2) déclenchant un arrêt d'urgence en cas de contact avec un obstacle, et d'un détecteur de surveillance (D) pouvant détecter une cible dans une zone de sécurité adjacente au convoyeur. Un système embarqué autorise le prélèvement uniquement en l'absence de cible.

Elle se caractérise en ce qu'elle comprend en outre au moins un élément d'intervention (3) activé pour éliminer ou modifier une cible détectée et n'entraînant pas un arrêt d'urgence, afin de permettre le prélèvement du produit.

## Description

La présente invention concerne le domaine du machinisme agricole, plus particulièrement de la robotisation agricole, notamment pour l'alimentation animale. Elle a pour objet une machine agricole autonome et automotrice et un procédé de contrôle de l'environnement d'une telle machine.

Il existe déjà des machines agricoles autonomes et automotrices, également appelées robots d'alimentation, conçues pour optimiser les opérations de prélèvement et de distribution d'un produit tel que du fourrage destiné notamment à l'alimentation des animaux dans les élevages. Grâce à un système embarqué de commande et de contrôle, ces machines se déplacent sans intervention humaine et ajustent leurs trajets en fonction des besoins de l'élevage. L'ensemble du processus de prélèvement, transport et distribution du produit est entièrement automatisé et exécuté par ce système embarqué. Cela permet de réduire la charge de travail des éleveurs et d'améliorer l'efficacité de l'alimentation et d'optimiser la gestion des ressources.

Le produit est prélevé directement dans un tas d'ensilage, généralement stocké dans un silo, à chaque passage de la machine dans le silo, lorsque celle-ci se trouve dans une zone de prélèvement devant et à proximité du tas d'ensilage, notamment du front vertical du tas d'ensilage. Le prélèvement est effectué, dans la position de prélèvement de la machine, par un outil de prélèvement, généralement une fraise rotative, monté dans une tête de prélèvement située à l'extrémité d'un convoyeur en forme de bras mobile monté à l'avant de la machine en s'étendant parallèlement à son axe longitudinal. Le convoyeur permet d'assurer à la fois le prélèvement et le chargement du produit dans la machine, notamment dans une cuve de la machine, en vue de son transport et de sa distribution dans la zone d'alimentation du bétail. Le convoyeur est réglable verticalement sur une plage de déplacement continu incluant une position de transport et des positions de travail opérationnelles correspondant chacune à une hauteur spécifique de la tête de prélèvement par rapport au sol. Ainsi le convoyeur permet un prélèvement sur toute la hauteur du tas d'ensilage. Dans certaines machines, le convoyeur est monté de sorte à être en outre mobile transversalement, c'est-à-dire perpendiculairement à l'axe longitudinal de la machine, permettant ainsi un prélèvement sur une plus grande largeur lorsque la tête de prélèvement, présente une largeur réduite, c'est-à-dire inférieure à la largeur maximale de la machine.

Par ailleurs, pour une question de sécurité, une telle machine est capable de détecter via un détecteur de surveillance (ou d'observation), généralement du type capteur LIDAR, un obstacle situé dans la zone de sécurité du système de surveillance. Cette zone de sécurité est adjacente (ou environnante) à la tête de prélèvement. Une telle machine comporte également des dispositifs de protection, généralement du type barres (ou bordures) sensibles, disposés autour de la machine et étant aptes et destinés à déclencher un arrêt d'urgence de la machine lorsqu'ils rencontrent un obstacle, par exemple un être humain ou un animal, avec une force de contact atteignant ou dépassant un seuil prédéfini. Ces dispositifs de protection sont disposés généralement à l'avant, sur les côtés et à l'arrière de la machine. Le dispositif de protection disposé à l'avant de la machine est disposé sur et à l'avant de la tête de prélèvement, notamment sur le capot de la tête de prélèvement protégeant l'outil de prélèvement.

Une telle machine connue est commercialisée par la présente demanderesse sous le nom commercial « AURA » et est décrite et illustrée, par exemple, dans le brevet FR3135871B1.

Ainsi, en fonctionnement, lorsque la machine s'approche de la zone de prélèvement, c'est-à-dire de sa position de prélèvement, si un obstacle est détecté dans la zone de sécurité par le détecteur de surveillance, le prélèvement du produit n'est pas autorisé par le système embarqué de la machine. La mission de la machine est alors interrompue jusqu'à l'intervention d'un utilisateur, informé par la machine. Cette intervention humaine consiste pour l'utilisateur à intervenir sur l'obstacle, par exemple en le déplaçant hors de la zone de prélèvement. Cette intervention manuelle permet d'écarter voire d'enlever l'obstacle de manière à ce qu'il ne soit plus détecté par le détecteur de surveillance et que le système embarqué autorise le prélèvement. Pour terminer son intervention, l'utilisateur doit autoriser la machine à reprendre ses opérations. En pratique, il va effectuer un réarmement en sécurité machine.

En pratique, l'utilisateur constate que l'obstacle détecté correspond à un tas de produit éboulé. La présence de cet obstacle entraîne une interruption systématique du prélèvement et l'envoi d'un message demandant une intervention de l'utilisateur. Comme le système de surveillance de la machine n'est pas capable de différencier le type d'obstacle détecté (tas de produit, être humain ou animal couché, pneu etc...), l'utilisateur est contraint de se déplacer pour intervenir sur l'obstacle et permettre à nouveau l'autorisation du prélèvement et la poursuite de la mission de la machine. La mission est interrompue jusqu'à l'intervention de l'utilisateur. Ce temps d'interruption entraîne un retard dans la distribution du produit aux animaux.

La présente invention a pour but de pallier ces inconvénients.

La machine agricole autonome et automotrice apte et destinée, lors d'un passage de prélèvement, à venir se positionner, de manière autonome, devant un tas de produit d'alimentation animale dans une position de prélèvement, la machine comprenant, d'une part, un convoyeur s'étendant parallèlement à l'axe longitudinal de la machine et permettant le prélèvement et le chargement d'un produit dans la machine, le convoyeur comportant une tête de prélèvement munie d'un outil de prélèvement et étant réglable verticalement sur une plage de déplacement incluant une position de transport et, d'autre part, au moins un dispositif de protection apte et destiné à déclencher un arrêt d'urgence lorsqu'il rencontre un obstacle avec une force de contact atteignant ou dépassant un seuil prédéfini, un détecteur de surveillance apte et destiné à détecter la présence éventuelle d'une cible dans une zone de sécurité adjacente à la tête de prélèvement et un système embarqué de commande et de contrôle de la machine configuré pour autoriser le prélèvement du produit uniquement lorsqu'aucune cible n'est détectée par le détecteur de surveillance, se caractérise en ce que la machine comprend en outre au moins un élément d'intervention et est configurée pour pouvoir activer le ou chaque élément d'intervention sous la commande et le contrôle du système embarqué, le ou chaque élément d'intervention étant apte et destiné à exercer, lorsqu'il est activé une action physique sur une cible détectée et ne formant pas un obstacle entraînant un arrêt d'urgence.

Le procédé de contrôle, selon la présente invention, de l'environnement d'une machine agricole autonome et automotrice apte et destinée, lors d'un passage de prélèvement, à venir se positionner, de manière autonome, devant un tas de produit d'alimentation animale dans une position de prélèvement, la machine comprenant, d'une part, un convoyeur s'étendant parallèlement à l'axe longitudinal de la machine et permettant le prélèvement et le chargement du produit dans la machine, le convoyeur comportant une tête de prélèvement munie d'un outil de prélèvement et étant réglable verticalement sur une plage de déplacement continu incluant une position de transport et une pluralité de positions de travail opérationnelles correspondant chacune à une hauteur spécifique de la tête de prélèvement (par rapport au sol), au moins un dispositif de protection apte et destiné à déclencher un arrêt d'urgence lorsqu'il rencontre un obstacle avec une force de contact atteignant ou dépassant un seuil prédéfini, un détecteur de surveillance apte et destiné à contrôler la présence éventuelle d'une cible dans une zone de sécurité adjacente à l'outil de prélèvement et un système embarqué de commande et de contrôle de la machine configuré pour autoriser le prélèvement du produit uniquement lorsqu'aucune cible n'est détectée par le détecteur de surveillance, se caractérise en ce que la machine comprend en outre au moins un élément d'intervention et en ce qu'il consiste, à chaque passage de prélèvement, à réaliser les étapes suivantes sous la commande et le contrôle du système embarqué :
- i) lorsque la machine s'approche de sa position de prélèvement, de préférence avec l'outil de prélèvement en position de transport, et lorsqu'une cible est détectée, ne pas autoriser le prélèvement tout en permettant à la machine d'atteindre sa position de prélèvement, de préférence en réduisant sa vitesse,
- ii) puis commander le recul de la machine jusqu'à une position de recul prédéterminée, et, éventuellement, commander le déplacement du convoyeur depuis sa position de transport pour abaisser la tête de prélèvement à proximité du sol,
le cas échéant, dans l'étape i) ou ii), localiser la cible détectée,
- iii) puis commander la machine de sorte à aligner le ou l'un des dispositif(s) de protection sur la cible détectée,
- iv) puis commander la machine de sorte à faire passer le dispositif de protection (aligné) sur la cible détectée,
- v) puis, si le dispositif de protection passant sur la cible détectée ne déclenche pas un arrêt d'urgence par son contact avec la cible détectée, commander l'activation du ou d'au moins l'un des élément(s) d'intervention pour exercer une action physique sur la cible détectée, de manière à ce que qu'elle ne soit plus détectable par le détecteur de surveillance afin d'autoriser le prélèvement du produit.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] une vue latérale d'une machine agricole autonome et automotrice selon la présente invention,
[Fig. 2] est une vue schématique de dessus d'une machine agricole autonome et automotrice selon la présente invention en position de prélèvement devant un tas de produit, avec détection d'une cible dans la zone de sécurité de la machine et dans une forme de la machine comprenant une tête de prélèvement de largeur inférieure à la largeur maximale de la machine,
[Fig. 3] est une vue schématique de dessus de la machine représentée sur la figure 2 dans une position prédéterminée de recul de cette dernière,
[Fig. 4] est une vue schématique de dessus de la machine représentée sur la figure 3 dans une position de déplacement de la machine dans laquelle le dispositif de protection aligné sur la cible passe sur cette dernière,
[Fig. 5] est une vue schématique de dessus de la machine représentée sur la figure 4 montrant en traits pleins et interrompus un déplacement transversal du convoyeur équipé de deux éléments d'intervention permettant d'activer ces dernier pour qu'ils interviennent sur la cible détectée,
[Fig. 6] est une vue schématique de dessus de la machine représentée sur la figure 4, après l'intervention sur la cible, dans une position de recul de la machine avec un recentrage du convoyeur en vue du prélèvement.
[Fig. 7] est une vue en perspective de la tête de prélèvement d'une machine agricole autonome et automotrice selon la présente invention, avec deux éléments d'intervention en forme d'élément de raclage,
[Fig. 8] est une vue de profil de la tête de prélèvement d'une machine agricole autonome et automotrice selon la présente invention, avec deux éléments d'intervention en forme d'éléments de balayage,
[Fig. 9] est une vue schématique de dessus d'une machine agricole autonome et automotrice selon la présente invention dans une forme de la machine comprenant une tête de prélèvement de largeur sensiblement égale à la largeur maximale de la machine.

Les figures annexées montrent, entièrement ou partiellement, une machine M agricole autonome et automotrice, selon la présente invention, dite machine M, apte et destinée, lors d'un passage de prélèvement, à venir se positionner, de manière autonome, devant un tas de produit P d'alimentation animale, notamment devant le front P1 du tas de produit P, dans une position de prélèvement. La machine M comprend :
- un convoyeur 1 s'étendant parallèlement à l'axe longitudinal X de la machine M et permettant le prélèvement et le chargement d'un produit P dans la machine M. Le convoyeur 1 comporte une tête de prélèvement 1a munie d'un outil de prélèvement 10a et est réglable verticalement sur une plage de déplacement continu incluant une position de transport H. Le convoyeur 1 est mobile verticalement depuis une position basse jusqu'à une position haute et réciproquement de sorte à pouvoir positionner l'outil de prélèvement 10a à des hauteurs différentes sur toute la hauteur du front d'attaque de sorte à pouvoir réaliser le prélèvement depuis le niveau du bord supérieur du tas de produit P jusqu'au niveau du sol S. Le convoyeur 1 peut ainsi avoir plusieurs positions de travail opérationnelles. Eventuellement, le convoyeur 1 peut être déplacé transversalement, c'est-à-dire perpendiculairement par rapport à l'axe longitudinal X de la machine M,
- au moins un dispositif de protection 2 (ou dit autrement dispositif de détection d'effort/de pression) apte et destiné à déclencher un arrêt d'urgence lorsqu'un obstacle avec une force de contact atteignant ou dépassant un seuil prédéfini est rencontré,
- un détecteur de surveillance D apte et destiné à détecter la présence éventuelle d'une cible C dans une zone de sécurité Z adjacente à la tête de prélèvement 1a,
- un système embarqué de commande et de contrôle de la machine M configuré pour autoriser le prélèvement du produit P uniquement lorsqu'aucune cible C n'est détectée par le détecteur de surveillance D.

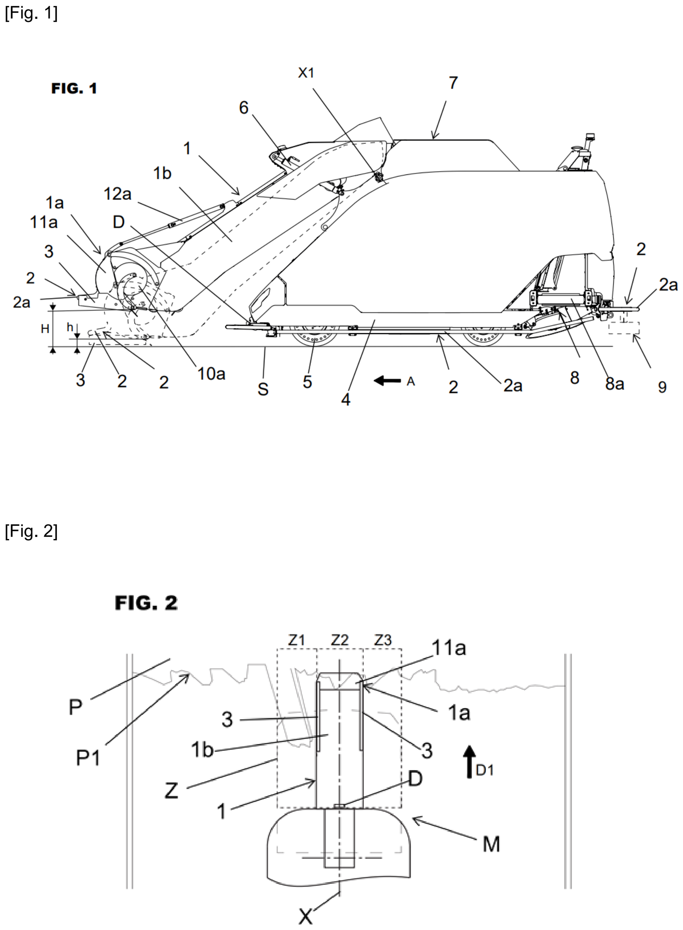

Plus particulièrement, comme on peut le voir sur les figures annexées, notamment sur les figures 1, 7 et 8, une telle machine M peut comprendre un châssis 4 monté sur des roues 5. L'outil de prélèvement 10a peut être, par exemple, une fraise rotative. Le convoyeur 1 présente une forme de bras articulé à l'avant de la machine M (en considérant le sens d'avancement A de cette dernière) autour d'un axe X1 horizontal (par rapport à une surface du sol S horizontal). Le convoyeur 1 peut être monté de sorte à pouvoir être déplacé verticalement (dans un plan vertical), sous l'effet d'un ou plusieurs actionneur(s) 6, par exemple des vérins hydrauliques. Ainsi, la tête de prélèvement 1a (et donc l'outil de prélèvement 10a) peut être déplacée sur toute la hauteur du tas de produit P. Sur la figure 1, la machine M est représentée avec le convoyeur 1 et la tête de prélèvement 1a dans une position de transport et la tête de prélèvement 1a s'étend à une hauteur H au-dessus du sol S. Pour effectuer ses déplacements lors d'une mission, la machine M est généralement dans cette configuration puisqu'alors le champ de détection du détecteur de surveillance D est dégagé. On remarque que dans la position basse h de la tête de prélèvement 1a telle que représentée en traits discontinus sur la figure 1, le champ de détection du détecteur de surveillance D est obstrué par la tête de prélèvement 1a. Dans cette position basse, la tête de prélèvement 1a peut ramasser le produit P qui est au pied de tas de produit P puisque la tête de prélèvement 1a est alors proche du sol S. Lors des déplacements de la machine M, le convoyeur 1 doit être positionné au-dessus du détecteur de surveillance D. Lorsque la tête de prélèvement 1a (et donc l'outil de prélèvement 10a) présente une largeur de travail inférieure à la largeur L maximale de la machine, le convoyeur 1 peut être monté de sorte à pouvoir être déplacé transversalement pour pouvoir couvrir une largeur de travail plus grande dans la même position de la machine M. On peut voir encore que la machine M peut comprendre au moins une cuve 7 pour recevoir le produit P prélevé et acheminé par le convoyeur 1. Cette cuve 7 est placée à l'arrière du convoyeur 1 au-dessus des roues 5. Le convoyeur 1 peut comporter un bâti 1b portant un système de transport, tel que par exemple une bande transporteuse, permettant de transporter et d'acheminer le produit P prélevé par l'outil de prélèvement 10a dans la cuve 7. La cuve 7 peut comprendre éventuellement un dispositif mélangeur pouvant comporter, par exemple, au moins une vis mélangeuse (non visible sur les figures annexées), monté(e) dans la cuve 7. La machine M peut comprendre en outre, comme on peut le voir notamment sur la figure 1, un dispositif de distribution 8 du produit prélevé permettant de distribuer le produit P prélevé et stocké dans la cuve 7. Le dispositif de distribution 8 peut comprendre un tapis de transport 8a, par exemple orienté transversalement par rapport à l'axe longitudinal X pour une distribution sur l'un des côtés de la machine M.

Le dispositif de protection 2 est un dispositif de sécurité conçu pour détecter tout contact physique entre le dispositif de protection 2 et un obstacle. Le dispositif de protection 2 est par exemple un palpeur sensible ou une bordure sensible, connu sous le terme anglais « bumper ». Dans le contexte de l'invention, un obstacle est par exemple un être humain ou un animal. Le dispositif de protection 2 est conçu/configuré pour déclencher un arrêt d'urgence de la machine M lorsque la force de contact est supérieur à un seuil prédéterminé. La force de déclenchement maximale pouvant être une force respectant notamment la norme ISO3991. Le dispositif de protection 2 est donc configuré pour envoyer un signal d'alerte au système embarqué pour déclencher l'arrêt d'urgence. Un tel dispositif de protection 2 peut comporter une barre allongée 2a montée sur les parties exposées de la machine M et un capteur. Les parties exposées peuvent être la tête de prélèvement 1a ou les bords ou côtés avant, arrière ou latéraux de la machine (figures 1 à 9 annexées). Lorsque la pression exercée par un obstacle entrant en contact avec la barre allongée 2a provoque une déformation ou un déplacement de la barre allongée, le capteur détecte ce déplacement ou cette déformation et envoie un signal électrique au système embarqué qui déclenche immédiatement l'arrêt d'urgence de la machine M afin d'éviter tout risque d'accident. Ce type de dispositif de protection 2 est connu dans les machines agricoles et industrielles pour permettre un travail sécurisé tout en minimisant les risques d'accidents liés aux mouvements des équipements automatisés.

La tête de prélèvement 1a peut en outre, comme on peut le voir notamment sur les figures 1, 7 et 8, être équipée d'un capot de fermeture 11a permettant de protéger l'outil de prélèvement 10a. Le capot de fermeture 11a peut être mobile, par exemple en étant articulé de manière pivotante entre une position de fermeture et une position d'ouverture permettant le prélèvement et l'accès à l'outil de prélèvement. L'actionnement de l'ouverture de la fermeture du capot peut être réalisé par un actionneur 12a, par exemple un vérin hydraulique. L'outil de prélèvement 10a prélève le produit P1 du tas de produit P et le projette sur le système de transport qui assure le transport du produit P1 vers la cuve 7 de la machine M. L'outil de prélèvement 10a est un élément actif qui intervient au niveau du front d'attaque P1. L'outil de prélèvement 10a est par exemple une fraise rotative munie de dents, lames et/ou pales, elle tourne autour d'un axe horizontal et transversal à l'axe longitudinal X. La vitesse de rotation de l'outil de prélèvement 10a est adaptée en fonction du type de produit P1 à prélever ou ramasser.

Le ou au moins l'un des dispositif(s) de protection 2 peut être monté à l'avant de la tête de prélèvement 10a en étant monté sur le capot de fermeture 11a de la tête de prélèvement 1a (voir notamment les figures 1, 7 et 8).

D'autre part, la machine M peut comprendre en outre un système de guidage pour permettre, de manière autonome, le déplacement et les opérations de prélèvement, de transport et de distribution, selon la mission de prélèvement et/ou de distribution prédéterminée sélectionnée.

Conformément à la présente invention une telle machine M comprend en outre au moins un élément d'intervention 3 et est configurée pour pouvoir activer le ou chaque élément d'intervention 3 sous la commande et le contrôle du système embarqué. Le ou chaque élément d'intervention 3 est apte et destiné, lorsqu'il est activé, à exercer une action physique sur une cible C détectée et ne formant pas un obstacle pouvant entraîner un arrêt d'urgence (par exemple par son contact avec le ou l'un des dispositif(s) de protection 2). Cette action physique sur la cible C détectée est réalisée de manière à ce que cette dernière ne soit plus détectable par le détecteur de surveillance D afin d'autoriser le prélèvement du produit P. Grâce à cette action physique de l'élément d'intervention 3, la cible C détectée n'est plus détectée par le détecteur de surveillance D et par conséquent le prélèvement du produit P est autorisé. L'absence d'obstacle dans la zone de sécurité Z, adjacente à la tête de prélèvement 1a, permet à la machine M autonome, notamment au système embarqué, d'autoriser le prélèvement du produit P et donc d'activer la tête de prélèvement 1a pour charger du produit P dans la cuve 7. Il est à noter que lors du déroulement des missions journalières de la machine M, la majorité du temps l'étape de prélèvement de produit P au niveau du tas de produit P est effectué normalement, sans action de l'élément d'intervention 3, puisqu'aucun obstacle n'est détecté par le détecteur de surveillance D la majorité du temps.

La machine M est capable, via son détecteur de surveillance D, de détecter un obstacle présent dans la zone de sécurité Z. Le détecteur de surveillance D peut être installé à l'avant de la machine M et de manière centré par rapport à l'axe longitudinal X. D'une manière avantageuse, la largeur de la zone de sécurité Z (dans une direction perpendiculaire à l'axe longitudinal X de la machine) est adaptable à la zone à surveiller par le détecteur de surveillance D. La zone de sécurité Z correspond sensiblement au champ de détection de détecteur de surveillance D. Dans l'exemple de réalisation d'un détecteur de surveillance D du type capteur LIDAR, la nature de l'obstacle ne peut être déterminée. Avec cette technologie de capteur, on ne peut déterminer si la cible C, notamment l'obstacle, est, par exemple, un être humain, un animal ou un tas de produit P provenant d'un éboulement du tas de produit P. La présente invention peut prévoir d'utiliser le ou l'un des dispositif(s) de protection 2 pour différencier une cible C détectée par le détecteur de surveillance D par le fait qu'un arrêt d'urgence est entrainé ou non. Comme cela sera décrit plus en détail par la suite, la présente invention peut prévoir d'utiliser le ou l'un des dispositif(s) de protection 2 en le faisant passer sur la cible C détectée pour déterminer si celle-ci est du type (par exemple un être humain ou un animal) formant un obstacle entraînant un arrêt d'urgence nécessitant une intervention spécifique ou du type (par exemple un tas de produit P éboulé du tas de produit P) n'entraînant pas un arrêt d'urgence mais nécessitant une intervention sur la cible C. Cette intervention est réalisée automatiquement grâce à la machine M selon la présente invention par l'activation du ou d'au moins l'un des élément(s) d'intervention comme cela sera également décrit plus en détail par la suite.

De préférence, la présente invention peut prévoir d'utiliser le dispositif de protection 2 monté sur la tête de prélèvement 1a. Cette disposition permet par le déplacement vertical de la tête de prélèvement 1a (sous l'effet du déplacement vertical du convoyeur 1) d'amener le dispositif de protection 2 à proximité du sol S et donc à hauteur de la cible C détectée, par exemple un tas de produit éboulé sur le sol S, et de permettre un ajustement de son alignement sur la cible C (figure 1 à 8). Elle peut aussi prévoir d'utiliser d'autres dispositifs de protection 2 situés autour de la machine M, par exemple le ou l'un des dispositif(s) de protection 2 situé(s) à l'arrière de la machine M. Dans cette alternative, la présente invention peut prévoir un dispositif de réglage 9 de la hauteur du dispositif de protection 2 arrière par rapport au sol S (figure 1). Le dispositif de réglage 9 peut comprendre une partie mobile verticalement supportant le dispositif de protection à l'arrière de la machine M de sorte à pouvoir le déplacer entre au moins une position de transport de la machine M et une position basse à proximité du sol S. Dans une forme de réalisation où la machine M comporte un dispositif de protection 2 situé sur le convoyeur 1, notamment en amont de la tête de prélèvement 1a, et un dispositif de protection situé à l'arrière, la machine M peut utiliser l'un ou l'autre des dispositifs de protection 2. On comprend également que l'utilisation du dispositif de protection situé à l'arrière de la machine M nécessite un retournement, c'est-à-dire une inversion de l'orientation (rotation de 180°), de la machine M pour permettre l'alignement du dispositif de protection 2 arrière sur la cible C. Grâce à ce retournement, c'est le dispositif de protection 2 arrière, notamment en position basse, qui pourra passer sur la cible C lors d'un déplacement de la machine M vers le front P1 du tas de produit P afin de pouvoir différencier la cible C détectée.

Suite à l'activation de l'élément d'intervention 3 ou des éléments d'intervention 3 sur la cible C détectée et différenciée, le détecteur de surveillance D ne détecte plus d'obstacle, ce qui entraine l'autorisation de prélèvement. Le système embarqué permet alors à la machine M de reprendre sa mission et de prélever le produit P avec son outil de prélèvement 10a. Grâce à l'action de l'élément d'intervention 3 pour étaler le tas de produit P éboulé formant par exemple la cible C détectée, la machine M pourra poursuivre sa mission de manière autonome sans nécessiter une quelconque intervention de l'utilisateur. La cible C détectée est alors écartée, voire supprimée, via son ou ses élément(s) d'intervention 3 activé(s) sous le contrôle et la commande du système embarqué de la machine M.

L'intervention sur la cible C (détectée et différenciée) par le ou au moins l'un des élément(s) d'intervention 3 peut consister à modifier ou éliminer (ou dégager) la cible C. La cible C peut être modifiée en étant écrêtée, aplanie ou répartie de sorte à réduire sa hauteur par exemple afin qu'elle ne soit plus détectable par le détecteur de surveillance D. La cible C peut être éliminée en étant poussée ou déplacée, notamment latéralement ou sur le côté de la machine M.

Le ou les élément(s) d'intervention 3 permet/permettent ainsi à la machine M de continuer son opération de prélèvement sans intervention humaine, ce qui réduit les temps d'arrêt de la machine M et améliore considérablement le taux de service. De plus, en permettant à la machine M d'agir elle-même directement sur la cible C à la place d'un utilisateur, celui-ci n'est plus contraint de se déplacer jusqu'à la machine M pour différencier la cible C, c'est-à-dire vérifier le type de cible détectée C et, le cas échéant, pour intervenir sur la cible C pour la modifier ou l'éliminer.

De préférence, le ou au moins l'un des élément(s) d'intervention 3 peut être, comme on peut le voir sur les figures annexées et notamment sur les figures 1, 7 et 8, disposé à l'avant de la machine M, de préférence sur le convoyeur 1, de préférence sur la tête de prélèvement 1a, notamment à l'avant de la tête de prélèvement 1a. Dans une alternative non illustrée sur les figures annexées, le ou au moins l'un des élément(s) d'intervention 3 peut être disposé à l'arrière de la machine M.

Dans la forme de réalisation non illustrée où le ou au moins l'un des élément(s) d'intervention 3 est disposé à l'arrière, le système embarqué peut être configuré pour commander un retournement, c'est-à-dire dit autrement une inversion de l'orientation (ou une rotation de 180° ou un basculement du référentiel avant/arrière), de la machine M afin de permettre l'intervention sur la cible C détectée et différenciée du ou des élément(s) d'intervention 3 disposé(s) à l'arrière de la machine M, en maintenant le sens de déplacement de la machine M vers le tas de produit P à prélever.

Dans un mode de réalisation préférentiel, un ensemble de protection et d'intervention composé du ou d'au moins l'un des élément(s) d'intervention 3 et le ou l'un des dispositifs de protection 2 peut être monté de sorte à former un ensemble unitaire, lui-même pouvant être monté sur la tête de prélèvement 1a ou sur le bâti 1b du convoyeur 1 (figures 1 à 8 pour l'ensemble de protection et d'intervention situé sur la tête de prélèvement 1a).

De préférence, le ou au moins l'un des élément(s) d'intervention 3 peut être orienté essentiellement parallèlement à l'axe longitudinal X de la machine M (figures 1 à 9). Avec une telle orientation de l'élément d'intervention 3, l'action est alors essentiellement latérale, parallèle à l'axe longitudinal X de la machine M.

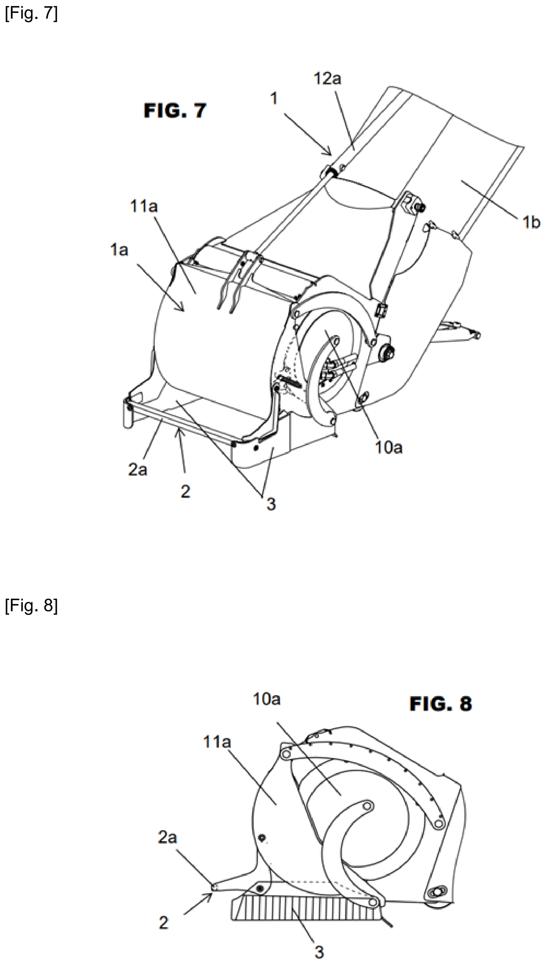

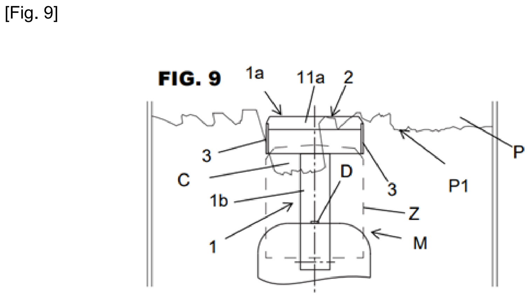

De préférence, le ou au moins l'un des élément(s) d'intervention 3 peut consister en :
- un élément de raclage tel qu'une lame racleuse (figures 1 et 8), de préférence présentant au moins une surface de contact s'étendant sensiblement verticalement, ou
- un élément de balayage tel qu'une brosse ou un balai (figure 9). Dans une forme non illustrée sur les figures annexées, la brosse ou la brosse du balai peut être rotative, c'est-à-dire que la brosse est motorisée ou utilise un moteur électrique pour son entraînement rotation, Une telle brosse, éventuellement rotative, peut comporter plusieurs brosses ou segments de brosses, éventuellement rotatives/rotatifs, ou
- un souffleur à air (non illustré sur les figures annexées).

L'élément de raclage, tel qu'une lame racleuse (figures 1, 7) est particulièrement efficace et permet une intervention précise. Il permet de racler, écrêter, aplanir, répartir ou pousser, au moins partiellement, une cible C telle qu'un tas de produit P éboulé. Il entre en contact avec la cible C, notamment avec le sommet de la cible C. Pour aplanir le sommet de la cible C, l'élément de raclage n'entre pas en contact avec le sol S. Le bord inférieur de l'élément de raclage (ou de la lame racleuse) peut ainsi être situé à environ 10 cm au-dessus du sol S. Lorsque l'élément de raclage ne touche pas le sol S, son usure est limitée. Dans une autre utilisation, l'élément d'intervention 3 peut être amené à répartir au moins une partie de la cible C sur le côté, c'est-à-dire qu'au moins une partie du tas de produit P est étalée en dehors de la zone de sécurité Z. L'élément d'intervention 3 pourra alors s'étendre à une certaine distance du sol S pour étaler le produit P afin de libérer la zone de sécurité Z et d'autoriser l'activation de la fraise rotative pour charger du produit P. Dans une utilisation différente, l'élément d'intervention 3 peut être amené à pousser la cible C sur le côté, par exemple la majorité du tas de produit P est déplacée en dehors de la zone de sécurité Z. Pour cette action, l'élément d'intervention 3 est avantageusement en contact avec le sol S, ce qui permet de dégager ou déplacer une grande partie de produit P en dehors de la zone de sécurité Z. Les différentes utilisations décrites ci-avant sont aussi applicables pour le balai mécanique rotatif. Sur la figure 7, on peut voir que l'élément de raclage peut être essentiellement parallèle à l'axe longitudinal X et qu'il peut s'étendre essentiellement verticalement ou dans un plan essentiellement vertical. Pour une meilleure action de l'élément de raclage lors des translations, celui-ci peut disposer d'une extrémité recourbée sur l'avant du dispositif de protection 2.

L'élément de balayage, tel qu'une brosse ou un balai, permet également une intervention efficace sur une cible C (figure 8). Il peut être constitué de fibres montées sur un support rotatif ou fixe, permettant notamment de balayer, racler, aplanir, répartir ou pousser, au moins partiellement, une cible C. Les fibres sont préférentiellement longues et rigides. De préférence, les fibres peuvent être plus ou moins épaisses et denses. Lors de l'intervention, l'élément de balayage, notamment les fibres, entre en contact avec la cible C et, si nécessaire, avec le sol S pour plus d'efficacité. L'élément de balayage, tel qu'une brosse ou un balai, est moins susceptible d'endommager la surface du sol S ou de s'user qu'un élément de raclage, tel qu'une lame racleuse, en contact avec le sol S. Un contact avec le sol S permet d'obtenir un effet de raclage sur toute la hauteur de la cible C posée à même le sol S.

Le souffleur à air permet une intervention rapide et efficace par un effet de soufflage d'air à haute pression sur la cible C.

L'élément de raclage, tel qu'une la lame racleuse et l'élément de balayage, tel qu'une brosse ou un balai, peuvent nécessiter moins de maintenance que le souffleur à air qui peut être sujet à l'usure rapide des composants mécaniques ou hydrauliques et sont moins consommateurs d'énergie que le souffleur à air, ce qui peut être un avantage en termes d'efficacité énergétique et de coûts opérationnels. D'autre part, l'élément de raclage et l'élément de balayage génèrent moins de bruit que le souffleur à air, ce qui peut être un avantage dans les environnements où le bruit doit être minimisé.

Selon une caractéristique de la présente invention, le ou au moins l'un des élément(s) d'intervention 3 peut comporter une surface de contact orientée sensiblement verticalement (figures 1 à 8). La surface de contact correspond à la zone effective de l'élément d'intervention 3 qui entre en contact direct avec la cible C lors de l'action. La surface de contact peut correspondre, pour un élément de raclage tel qu'une lame racleuse à la partie de la lame qui touche et racle la cible C, tandis que pour un élément de balayage tel qu'une brosse ou un balai, c'est l'aire couverte par les fibres.

On comprend que le ou chaque élément d'intervention 3 est apte et destiné, lorsqu'il est activé, à exercer une action physique sur une cible C notamment par contact direct entre le ou les éléments d'intervention 3 (par exemple lorsque l'élément d'intervention 3 est un élément de raclage ou de balayage) et la cible C détectée ou à distance de cette dernière (par exemple lorsque l'élément d'intervention 3 est un souffleur à air).

De préférence, on peut voir sur la figure 1 que la tête de prélèvement 1a peut être équipée de deux éléments d'intervention 3. Les deux éléments d'intervention 3 sont alors disposés respectivement de chaque côté de la tête de prélèvement 1a, notamment en s'étendant parallèlement à l'axe longitudinal X de la machine M et du convoyeur 1. De préférence, les deux éléments d'intervention 3 sont identiques et pourront consister préférentiellement en un élément de raclage tel qu'une lame racleuse ou un élément de balayage tel qu'une brosse ou un balai. L'efficacité de l'intervention est améliorée puisque ces éléments d'intervention 3 offrent une couverture d'intervention plus grande en fonction de la position de la cible C détectée dans la zone de sécurité. Selon un exemple de réalisation non représenté, la tête de prélèvement 1a peut être équipée d'un seul élément d'intervention 3 monté sur l'un des côtés de la tête de prélèvement 1a.

La présente invention peut avantageusement prévoir que le ou l'un au moins des élément(s) d'intervention 3 est configuré et disposé de sorte à pouvoir être activé par un déplacement adapté de la machine M et/ou du convoyeur 1. On comprend que le convoyeur 1 en déplacement est équipé du ou d'au moins l'un des élément(s) d'intervention 3. De préférence, le ou l'un au moins des élément(s) d'intervention 3 pouvant être activé par un tel déplacement, peut consister préférentiellement en un élément de raclage tel qu'une lame racleuse ou un élément de balayage tel qu'une brosse ou un balai. De préférence, le déplacement de la machine M et/ou du convoyeur 1 peut être transversal, c'est-à-dire sensiblement perpendiculaire à son axe longitudinal X. Le déplacement transversal de la machine M peut être compris comme un déplacement « en crabe » de la machine M rendu possible par des roues 5 rendues omnidirectionnelles. Cette possibilité d'activer le ou les élément(s) d'intervention 3 par un déplacement de la machine M et/ou du convoyeur 1 présente plusieurs avantages significatifs. Ce déplacement permet en effet d'entrainer solidairement le déplacement de l'élément d'intervention 3 ou des éléments d'intervention 3 pour intervenir sur la cible C, offrant ainsi une solution efficace et précise pour le traitement de la cible C de manière à ce qu'elle ne soit plus détectable par le détecteur de surveillance D. La machine M peut ainsi rapidement éliminer ou modifier la cible C sans nécessiter de manœuvres complexes de la machine M ou d'ajouter sur la machine M un système d'actionnement de l'élément d'intervention 3, ce qui améliore l'efficacité opérationnelle et réduit les coûts ainsi que les temps d'arrêt de la machine M. Un tel déplacement peut inclure un mouvement de balayage (ou de va et vient) de l'élément d'intervention 3 ou des éléments d'intervention 3, notamment le cas échéant sous l'effet d'un balayage (ou va et vient) transversal du convoyeur 1 (configuré pour être déplacé transversalement) équipé du ou des élément(s) d'intervention 3.

Ainsi, en fonctionnement, le système embarqué peut être configuré pour pouvoir, à chaque passage de prélèvement :
i) lorsque la machine M s'approche de sa position de prélèvement avec l'outil de prélèvement 1a en position de transport et qu'une cible C est détectée, ne pas autoriser le prélèvement tout en permettant à la machine M d'atteindre sa position de prélèvement, de préférence en réduisant sa vitesse,
ii) puis commander le recul de la machine M jusqu'à une position de recul prédéterminée,
le cas échéant, dans l'étape i) ou ii), localiser la cible C détectée,
iii) puis commander la machine M pour aligner le ou l'un des dispositif(s) de protection 2 sur la cible C détectée,
iv) puis commander le déplacement de la machine M de sorte à faire passer le ou dispositifs) de protection 2 aligné sur la cible C détectée,
v) puis, si le dispositif de protection 2 passant sur la cible C détectée ne déclenche pas un arrêt d'urgence par son contact avec la cible C détectée, commander l'activation du ou d'au moins l'un des élément(s) d'intervention 3, c'est-à-dire pour exercer l'action physique sur la cible C détectée pour que la cible C ne soit plus détectable par le détecteur de surveillance D afin d'autoriser le prélèvement du produit P.

Lorsque le dispositif de protection 2 présente une étendue (surface sensible) couvrant au moins la largeur de la zone de sécurité Z (figure 9), l'alignement peut consister à uniquement ajuster la position verticale du dispositif de protection 2, par exemple en abaissant la tête de prélèvement 1a équipée de ce dispositif de protection 2 pour l'amener à une hauteur h à proximité du sol S. On peut voir sur la figure 9 que la machine M comprend une tête de prélèvement 1a présentant une largeur sensiblement égale à la largeur maximale L de la machine M, cette largeur correspondant à la largeur de la zone de sécurité Z. Le dispositif de protection 2 s'étend sensiblement sur toute la largeur de la tête de prélèvement 1a.

Lorsque le dispositif de protection 2 présente une étendue couvrant seulement une partie de la largeur de la zone de sécurité Z l'alignement peut consister à ajuster la position verticale et/ou horizontale du dispositif de protection 2, par exemple en déplaçant horizontalement et/ou verticalement la tête de prélèvement 1a (équipée du dispositif de protection 2) et/ou la machine M afin qu'il soit aligné sur la cible C, c'est-à-dire dans l'axe de la cible C (alignement horizontal) et à la même hauteur que cette dernière (alignement vertical).

La position de recul prédéterminée de la machine M peut être une position dans laquelle la cible C n'est plus détectée par le détecteur de surveillance D.

En ne permettant pas dans l'étape i) le prélèvement lorsque la cible C est détectée, le système embarqué garantit que les opérations ne se poursuivent pas dans des conditions potentiellement dangereuses. La sécurité autour de la tête de prélèvement 1a de la machine M est assurée. En commandant le recul de la machine M jusqu'à une position de recul prédéterminée, le système minimise les risques d'accidents et de danger en éloignant la machine M de la zone de prélèvement. Ainsi, la tête de prélèvement 1a est éloignée de l'obstacle avant le déplacement du convoyeur 1 et/ou de la machine M pour aligner le dispositif de protection 2 sur la cible C. Le passage du dispositif de protection 2 sur la cible C permet ensuite de différencier la cible C en déterminant si la cible C est du type entraînant un arrêt d'urgence et l'envoi d'une information à l'utilisateur ou du type n'entrainant pas un arrêt d'urgence et nécessitant une intervention pour permettre la poursuite de la mission, notamment du prélèvement de produit P.

Selon une caractéristique de la présente invention, le détecteur de surveillance D et le système embarqué peuvent être configurés pour pouvoir localiser la cible C de manière précise par des paramètres de localisation. Dans une variante, comme on peut le voir sur les figures 2 à 4, le détecteur de surveillance D et le système embarqué peuvent être configurés pour pouvoir localiser la cible C en identifiant, parmi un ensemble de subdivisions, de préférence un ensemble de trois subdivisions Z1, Z2, Z3, prédéfini de la zone de sécurité Z, la subdivision Z1, Z2, Z3 dans laquelle la cible C a été détectée.

De préférence, comme on peut le voir sur les figures 2 à 4, chaque subdivision Z1, Z2, Z3 peut s'étendre parallèlement à l'axe longitudinal X de la machine M.

Dans une forme de réalisation préférentielle, la zone de sécurité Z peut être subdivisée en plusieurs subdivisions, préférentiellement trois subdivisions Z1, Z2, Z3, s'étendant parallèlement à l'axe longitudinal X de la machine M (figures 2 à 4). De préférence, les subdivisions Z1, Z2, Z3 ont une forme rectangulaire, en vue de dessus. De préférence les subdivisions Z1, Z2, Z3 ont une largeur (dans une direction perpendiculaire à l'axe longitudinal X de la machine M) sensiblement identique. De préférence, chaque subdivision Z1, Z2, Z3 peut présenter une largeur sensiblement égale ou sensiblement inférieure à la largeur du ou de l'un des dispositif(s) de protection 2, notamment le dispositif de protection 2 situé à l'avant de la tête de prélèvement 1a. Ainsi, le dispositif de protection 2 peut présenter une longueur de contact (étendue de sa surface de contact) sensiblement égale ou sensiblement supérieure à la largeur de chaque subdivision Z1, Z2, Z3. La longueur de contact peut être déterminée par la longueur de la barre allongée 2a du dispositif de protection 2. Cette proportion permet de garantir que le dispositif de protection 2 couvre toute la largeur de chaque subdivision Z1, Z2, Z3 afin de pouvoir passer immanquablement sur la cible détectée C. On comprend que, suite à la détection de la cible C et de son identification permettant de la localiser dans l'une des subdivisions Z1, Z2, Z3, l'étape d'alignement peut alors consister à positionner le dispositif de protection 2 au niveau de la subdivision Z1, Z2, Z3 dans laquelle a été détectée et localisée la cible C, puis à déplacer la machine M vers la cible C sur le même axe de déplacement que lors de son approche initiale vers le tas de produit P.

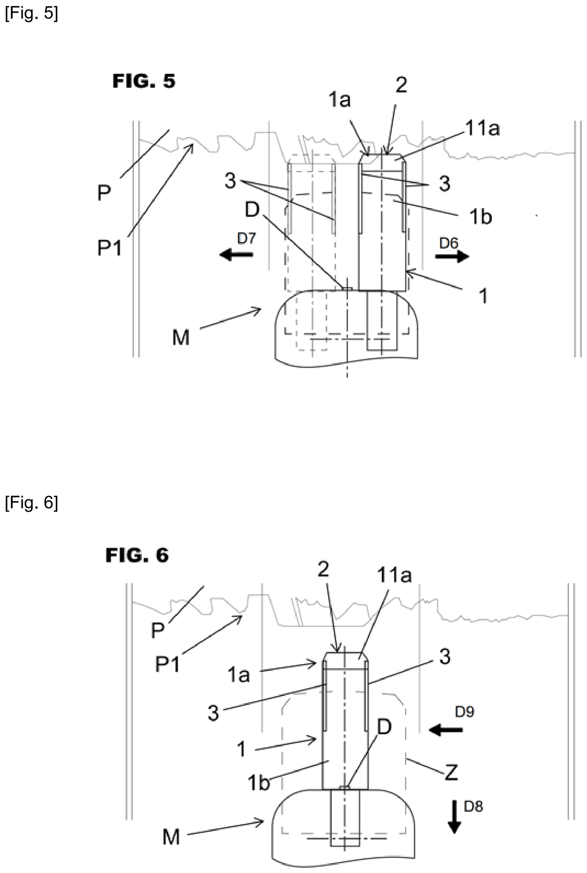

Les figures 2 à 6 montrent un exemple de fonctionnement de la machine M selon la présente invention dans une forme de réalisation utilisant le dispositif de protection 2 situé à l'avant de la tête de prélèvement 1a. La tête de prélèvement 1a présente une largeur inférieure à la largeur de la zone de sécurité Z et à la largeur maximum L de la machine M. La tête de prélèvement 1a est équipée de deux éléments d'intervention 3. Un élément d'intervention 3 disposé de chaque côté de la tête de prélèvement 1a. Les figures 2 à 6 représentent les différentes étapes lorsqu'un obstacle est détecté par la machine M à proximité du front P1 du tas de produit P. Les éléments d'intervention 3 sont représentés schématiquement sur ces figures :
- La figure 2 illustre la machine M dans la zone de prélèvement à proximité du tas de produit P. Pour arriver dans cette position de prélèvement, la machine M s'est approchée du tas de produit P dans la direction de son axe longitudinal X (axe de déplacement X initial) et dans le sens D1, avec le convoyeur 1 en position de transport/route (hauteur H par rapport au sol S de la tête de prélèvement 1a). Dans cette phase d'approche, le détecteur de surveillance D détecte une cible C dans la subdivision Z1 de la zone de sécurité Z. Le système embarqué, informé de cette détection, autorise la machine M à atteindre la zone de prélèvement mais n'autorise pas le prélèvement de produit P. Cette identification/localisation de la cible C dans la subdivision Z1 est mémorisée dans une mémoire du système embarqué. Dans cette phase d'approche, la machine M se déplace avec vitesse réduite. Si plusieurs obstacles se trouvent dans la zone de sécurité Z, la cible C selon la présente invention correspond à l'obstacle prioritairement détecté par le détecteur de surveillance D,

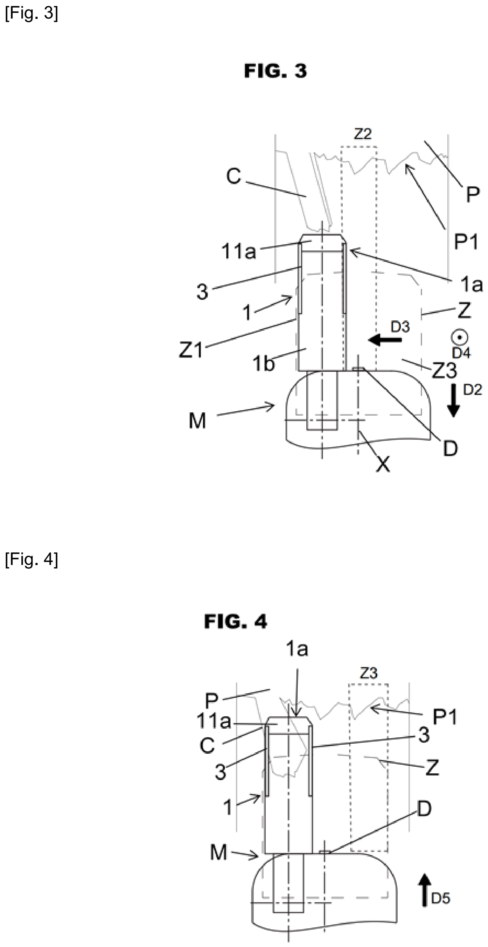

- Sur la figure 3, la machine s'est éloignée du front P1 et de l'obstacle. En effet, le système embarqué a commandé le recul de la machine M dans le sens D2, sens inverse par rapport D1. La marche arrière a été effectuée selon l'axe longitudinal X de la machine M jusqu'à une position de recul prédéterminée permettant de positionner la tête de prélèvement 1a en dehors de la zone de prélèvement. Puis, le système embarqué commande l'alignement du dispositif de protection 2 sur la cible C, c'est-à-dire que le convoyeur 1 est déplacé horizontalement vers la gauche dans le sens de D3. Le convoyeur 1 s'étend alors dans la subdivision Z1. Le convoyeur 1 est alors abaissé dans le sens de D4 pour positionner la tête de prélèvement 1a dans une position basse (hauteur h) à proximité du sol S. Ce positionnement de la tête de prélèvement 1 au niveau de la subdivision Z1 et à proximité du sol S permet d'ajuster la position verticale du dispositif de protection 2 avec la hauteur de la cible C posée à même le sol S pour permettre leur alignement,
- Sur la figure 4, la tête de prélèvement 1a est positionnée au-dessus de la cible C. Le système embarqué de la machine M commande le déplacement de la machine M dans le sens D1 selon l'axe longitudinal X. La machine M avance vers la cible C détectée par le détecteur de surveillance D. Le dispositif de protection 2 passe alors sur la cible C sans déclencher un arrêt d'urgence car la force de contact avec la cible C ne dépasse pas la force d'activation maximale de déclenchement. Lorsque l'arrêt d'urgence est déclenché par le dispositif de protection 2 passant sur la cible C (c'est-à-dire sur une autre cible que celle illustrée, par exemple une cible C telle qu'un animal couché) car la force de contact sur le dispositif de protection 2 dépasse la force d'activation maximale, il y a arrêt immédiat de tout processus en cours pour la machine M et le système embarqué interrompt toute action de la machine M et informe l'utilisateur.
- L'étape suivante est illustrée à la figure 5, le convoyeur 1 se déplace transversalement dans un mouvement de va et vient dans les sens D6 et D7 pour écrêter, au moyen des éléments d'intervention 3, la cible C détectée et n'ayant pas entraînée un arrêt d'urgence. Cette intervention des élément(s) d'intervention 3 équipant la tête de prélèvement 1a commandée et contrôlée par le système embarqué permet alors d'étaler le tas de produit éboulé (cible C) pour qu'il ne soit plus détectable par le détecteur de surveillance D. La zone de sécurité Z, notamment la subdivision Z1, est exempte de cible C. Les sens de déplacement D6 et D7 sont perpendiculaires par rapport à l'axe longitudinal X,
- La figure 6 représente la machine M devant le front P1 dans une position autorisant un prélèvement de produit P au moyen de la tête de prélèvement 1. Ainsi, le système embarqué commande le recul de la machine M, dans le sens D8, et, éventuellement, le centrage du convoyeur 1 pour permettre le prélèvement et le chargement du produit P dans la cuve 7 de la machine M grâce à une translation selon D9. Le système embarqué commande alors le déplacement de la machine M vers le front P1 et autorise l'activation de l'outil de prélèvement 10a pour prélever du produit P.

Dans certains cas, la cible C ne peut être étalée complètement, par exemple lorsque le tas de produit P est conséquent. La cible C sera donc toujours présente devant le tas de produit P et par conséquent détectée par le détecteur de surveillance D. Le système embarqué pourra alors éventuellement commander plusieurs actions successives de l'élément d'intervention 3 pour étaler le tas de produit P jusqu'à ce que le détecteur de surveillance D ne détecte plus de cible C dans la zone de sécurité Z. Le système embarqué autorisera alors le prélèvement de produit P. Si la cible C est toujours présente malgré plusieurs actions successives de l'élément d'intervention 3 sur la cible C, le système embarqué n'autorisera pas le prélèvement de produit P et la mission de la machine M sera alors interrompue. Le système embarqué informera alors l'utilisateur qui devra se déplacer pour intervenir et s'assurer de la reprise de la mission de la machine M. Ce dernier cas demandant une intervention de l'utilisateur est à considérer comme exceptionnel selon la présente invention, c'est-à-dire qu'il ne peut se produire que très rarement.

La figure 9 montre un autre exemple de fonctionnement avec une machine M dont la tête de prélèvement 1a est plus large que celle des figures 2 à 6. La largeur de la tête de prélèvement 1a correspond sensiblement à la largeur maximum L de la machine M. On remarque que cette largeur correspond sensiblement à la largeur de la zone de sécurité Z. Dans cette forme de réalisation, le dispositif de protection 2 s'étend sur toute la largeur à l'avant de la tête de prélèvement 1a. Ainsi la position exacte de la cible C dans la zone de sécurité Z n'a pas besoin d'être déterminée et connue par le système embarqué, car l'étendue (de la surface de contact) du dispositif de protection 2 sur toute la largeur de la zone de sécurité Z et sa position verticale ajustée à la hauteur de la cible C garantissent qu'il passera nécessairement sur la cible C détectée. La tête de prélèvement 1a est équipée de deux éléments d'intervention 3 disposés de chaque côté de la tête de prélèvement 1a. Dans cette configuration, il n'est donc pas nécessaire d'aligner horizontalement le dispositif de protection 2 sur la cible C (à condition que la machine M se déplace sur le même axe de déplacement initial depuis son approche initiale vers le tas de produit P). Cette configuration simplifie le processus de détection et d'intervention, assurant une couverture complète et efficace de la zone de sécurité Z.

La présente invention a également pour objet un procédé de contrôle de l'environnement d'une telle machine M agricole autonome et automotrice. Le procédé peut être mis en œuvre par une telle machine M décrite précédemment.

Conformément à la présente invention, le procédé consiste, à chaque passage de prélèvement, à réaliser les étapes suivantes sous la commande et le contrôle du système embarqué :
- i) lorsque la machine M s'approche de sa position de prélèvement, de préférence avec l'outil de prélèvement 1a en position de transport, et qu'une cible C est détectée, ne pas autoriser le prélèvement tout en permettant à la machine M d'atteindre sa position de prélèvement, de préférence en réduisant sa vitesse,
- ii) puis commander le recul de la machine M jusqu'à une position de recul prédéterminée, et, éventuellement, commander le déplacement du convoyeur (1) depuis sa position de transport pour abaisser la tête de prélèvement (1a) à proximité du sol S,
le cas échéant dans l'étape i) ou ii), localiser la cible C détectée,
- iii) puis commander la machine M de sorte à aligner le ou l'un des dispositif(s) de protection 2 sur la cible C détectée,
- iv) puis commander la machine M de sorte à faire passer le dispositif de protection 2 (c'est-à-dire le dispositif de protection 2 aligné) sur la cible C détectée,
- v) puis, si le dispositif de protection 2 passant sur la cible C ne déclenche pas un arrêt d'urgence par son contact avec la cible C détectée, commander l'activation du ou d'au moins l'un des élément(s) d'intervention 3 pour exercer une action physique sur la cible C détectée, de manière à ce qu'elle (la cible C détectée) ne soit plus détectable par le détecteur de surveillance D afin d'autoriser le prélèvement du produit P.

De préférence, le procédé peut consister dans l'étape iii) à commander la machine M pour aligner le dispositif de protection 2 sur la cible C détectée en commandant (à l'aide du système embarqué) un déplacement adapté de la machine M et/ou d'une partie mobile de la machine M. La partie mobile de la machine M peut être, par exemple, le convoyeur 1 équipé du dispositif de protection 2 à aligner ou une partie mobile verticalement (supportant le dispositif de protection 2 à aligner qui est situé à l'arrière de la machine M) du dispositif de réglage 9 situé à l'arrière de la machine M. De préférence, le déplacement adapté peut inclure un déplacement transversal adapté de la machine M et/ou du convoyeur 1. Eventuellement, le déplacement adapté peut inclure un changement d'orientation adapté de la machine M. Ainsi, en commandant un déplacement adapté, le système embarqué permet d'aligner précisément le dispositif de protection 2 sur la cible C. Le changement d'orientation de la machine M peut être, par exemple, comme mentionné plus haut, un retournement de la machine M, c'est-à-dire dit autrement une inversion de l'orientation (ou une rotation de 180°), de la machine M afin de permettre l'intervention sur la cible C du ou des élément(s) d'intervention 3 le cas échéant disposé(s) à l'arrière de la machine M.

De préférence, dans l'étape v), le procédé peut consister à commander l'activation du ou d'au moins l'un des élément(s) d'intervention 3 en commandant un déplacement adapté de la machine M et/ou un déplacement adapté d'une partie de la machine M telle que le convoyeur 1 équipé du ou d'au moins l'un des élément(s) d'intervention 3, par exemple du type élément de raclage tel qu'une lame racleuse ou élément de balayage tel qu'une brosse ou un balai, permettant d'amener le ou les élément(s) d'intervention directement en contact avec la cible C. De préférence le déplacement adapté peut être un déplacement transversal adapté comprenant un seul mouvement transversal (notamment à droite ou à gauche de la machine M dans le sens d'avancement A de cette dernière) ou plusieurs mouvements transversaux alternés (à droite et à gauche). La capacité à commander un déplacement transversal, que ce soit vers la droite ou la gauche, ou plusieurs mouvements alternés vers la droite et la gauche, offre une grande flexibilité pour traiter une cible C qui peut être située à différents endroits dans la zone de sécurité Z.

Dans l'étape iii), le procédé peut consister à localiser la cible C de manière précise par des paramètres de localisation ou en identifiant, parmi un ensemble de subdivisions Z1, Z2, Z3 prédéfini de la zone de sécurité Z, la subdivision Z1, Z2, Z3 dans laquelle la cible C a été détectée. Ces subdivisions de zone et leurs avantages ont déjà été évoquées plus haut. De préférence, comme illustré sur les figures 2 à 4 et mentionné plus haut, l'ensemble de subdivisions Z1, Z2, Z3 peut être composé de deux ou trois subdivisions s'étendant parallèlement à l'axe longitudinal X de la machine M.

De préférence, comme vu plus haut, le ou chaque élément d'intervention 3, notamment du type élément de raclage tel qu'une lame racleuse ou élément de balayage tel qu'une brosse ou un balai, agit sur la cible C pour racler, écrêter, aplanir, répartir ou étaler le produit P sur la surface du sol S sans être en contact avec le sol S lors de l'opération.

Ainsi, grâce à la présente invention et à sa capacité à identifier et traiter automatiquement les cibles détectées et qui ne nécessitent pas d'intervention humaine, l'utilisateur n'est plus contraint de se déplacer à chaque détection de cible par le détecteur de surveillance D lorsque la machine M s'approche de la zone de prélèvement du produit P. Cela réduit considérablement le besoin d'intervention manuelles lors de la mission de la machine M et évite les interruptions systématiques du prélèvement en permettant à la machine de poursuivre sa mission avec des temps d'interruption réduits, assurant ainsi une distribution continue et efficace du produit aux animaux. En minimisant ainsi les interruptions et les interventions manuelles, l'invention permet une meilleure gestion des ressources humaines et matérielles. En assurant une distribution régulière et sans interruption du produit aux animaux, l'invention contribue à améliorer la productivité globale de l'exploitation agricole. Les animaux reçoivent leur alimentation en temps voulu, ce qui a un impact positif sur leur santé et leur croissance. En outre, les opérateurs peuvent se concentrer sur d'autres tâches importantes, tandis que la machine fonctionne de manière autonome et efficace.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Machine (M) agricole autonome et automotrice apte et destinée, lors d'un passage de prélèvement, à venir se positionner, de manière autonome, devant un tas de produit (P) d'alimentation animale dans une position de prélèvement, la machine (M) comprenant, d'une part, un convoyeur (1) s'étendant parallèlement à l'axe longitudinal (X) de la machine (M) et permettant le prélèvement et le chargement d'un produit (P) dans la machine (M), le convoyeur (1) comportant une tête de prélèvement (1a) munie d'un outil de prélèvement (10a) et étant réglable verticalement sur une plage de déplacement incluant une position de transport (H) et, d'autre part, au moins un dispositif de protection (2) apte et destiné à déclencher un arrêt d'urgence lorsqu'il rencontre un obstacle avec une force de contact atteignant ou dépassant un seuil prédéfini, un détecteur de surveillance (D) apte et destiné à détecter la présence éventuelle d'une cible (C) dans une zone de sécurité (Z) adjacente à la tête de prélèvement (1a) et un système embarqué de commande et de contrôle de la machine (M) configuré pour autoriser le prélèvement du produit uniquement lorsqu'aucune cible (C) n'est détectée par le détecteur de surveillance (D), **caractérisée en ce que** la machine (M) comprend en outre au moins un élément d'intervention (3) et est configurée pour pouvoir activer le ou chaque élément d'intervention (3) sous la commande et le contrôle du système embarqué, le ou chaque élément d'intervention (3) étant apte et destiné à exercer, lorsqu'il est activé, une action physique sur une cible (C) détectée et ne formant pas un obstacle entraînant un arrêt d'urgence.

2. Machine (M) selon la revendication 1, **caractérisée en ce que** le ou au moins l'un des élément(s) d'intervention (3) est disposé à l'avant de la machine, de préférence sur le convoyeur (1), de préférence sur la tête de prélèvement (1a), notamment à l'avant de la tête de prélèvement (1a), ou est disposé à l'arrière de la machine (M).

3. Machine (M) selon l'une quelconque des revendications 1 à 2, **caractérisée en ce que** le ou au moins l'un des élément(s) d'intervention (3) est orienté essentiellement parallèlement à l'axe longitudinal (X) de la machine (M).

4. Machine (M) selon l'une quelconque des revendications 1 à 3, **caractérisée en ce que** la tête de prélèvement (1a) est équipé de deux éléments d'intervention (3) disposés respectivement de chaque côté de la tête de prélèvement (1a).

5. Machine (M) selon l'une quelconque des revendications 1 à 4, **caractérisée en ce que** le ou au moins l'un des élément(s) d'intervention (3) consiste en :
- un élément de raclage tel qu'une lame racleuse, de préférence présentant au moins une surface de contact s'étendant sensiblement verticalement, ou
- un élément de balayage tel qu'une brosse ou un balai, la brosse ou la brosse du balai étant éventuellement rotative, ou
- un souffleur à air.

6. Machine (M) selon l'une quelconque des revendications 1 à 5, **caractérisée en ce que** le ou au moins l'un des élément(s) d'intervention (3) est configuré et disposé de sorte à pouvoir être activé par un déplacement adapté, de préférence un déplacement transversal adapté de la machine (M) et/ou du convoyeur (1) équipé du ou d'au moins l'un des élément(s) d'intervention (3).

7. Procédé de contrôle de l'environnement d'une machine (M) agricole autonome et automotrice, la machine (M) étant apte et destinée, lors d'un passage de prélèvement, à venir se positionner, de manière autonome, devant un tas de produit (P) d'alimentation animale dans une position de prélèvement, la machine (M) comprenant, d'une part, un convoyeur (1) s'étendant parallèlement à l'axe longitudinal (X) de la machine (M) et permettant le prélèvement et le chargement du produit (P) dans la machine (M), le convoyeur (1) comportant une tête de prélèvement (1a) munie d'un outil de prélèvement (10a) et étant réglable verticalement sur une plage de déplacement continu incluant une position de transport et une pluralité de positions de travail opérationnelles correspondant chacune à une hauteur (h, H) spécifique de la tête de prélèvement (1a), au moins un dispositif de protection (2) apte et destiné à déclencher un arrêt d'urgence lorsqu'il rencontre un obstacle avec une force de contact atteignant ou dépassant un seuil prédéfini, un détecteur de surveillance (D) apte et destiné à contrôler la présence éventuelle d'une cible (C) dans une zone de sécurité (Z) adjacente à l'outil de prélèvement (1a) et un système embarqué de commande et de contrôle de la machine (M) configuré pour autoriser le prélèvement du produit uniquement lorsqu'aucune cible (C) n'est détectée par le détecteur de surveillance (D), procédé **caractérisé en ce que** la machine (M) comprend en outre au moins un élément d'intervention (3) et **en ce qu'**il consiste, à chaque passage de prélèvement, à réaliser les étapes suivantes sous la commande et le contrôle du système embarqué :
- i) lorsque la machine (M) s'approche de sa position de prélèvement, de préférence avec l'outil de prélèvement (1a) en position de transport, et qu'une cible (C) est détectée, ne pas autoriser le prélèvement tout en permettant à la machine (M) d'atteindre sa position de prélèvement, de préférence en réduisant sa vitesse,
- ii) puis commander le recul de la machine (M) jusqu'à une position de recul prédéterminée et, éventuellement, commander le déplacement du convoyeur (1) depuis sa position de transport pour abaisser la tête de prélèvement (1a) à proximité du sol (S),
le cas échéant, dans l'étape i) ou ii), localiser la cible (C) détectée,
iii) puis commander la machine (M) de sorte à aligner le ou l'un des dispositif(s) de protection (2) sur la cible (C) détectée,
- iv) puis commander la machine (M) de sorte à faire passer le dispositif de protection (2) sur la cible (C) détectée,
- v) puis, si le dispositif de protection (2) passant sur la cible (C) détectée ne déclenche pas un arrêt d'urgence par son contact avec celle-ci, commander l'activation du ou d'au moins l'un des élément(s) d'intervention (3) pour exercer une action physique sur la cible (C) détectée de manière à ce qu'elle ne soit plus détectable par le détecteur de surveillance (D) afin d'autoriser le prélèvement du produit (P).

8. Procédé selon la revendication 7, **caractérisé en ce qu'**il consiste dans l'étape iii) à commander la machine (M) pour aligner le dispositif de protection (2) sur la cible (C) en commandant un déplacement adapté de la machine (M) et/ou d'une partie mobile de la machine (M), par exemple le convoyeur (1) équipé du dispositif de protection (2) à aligner, de préférence le déplacement adapté incluant un déplacement transversal adapté de la machine (M) et/ou du convoyeur (1), éventuellement le déplacement adapté incluant un changement d'orientation adapté de la machine (M).

9. Procédé selon la revendication 7 ou 8, **caractérisé en ce que** qu'il consiste dans l'étape v) à commander l'activation du ou d'au moins l'un des élément(s) d'intervention en commandant un déplacement adapté de la machine (M) et/ou un déplacement adapté d'une partie de la machine (M) telle que le convoyeur (1) équipé du ou d'au moins l'un des élément(s) d'intervention (3) permettant d'amener le ou les élément(s) d'intervention directement en contact avec la cible (C), de préférence le déplacement adapté est un déplacement transversal adapté comprenant un seul mouvement transversal ou plusieurs mouvements transversaux alternés.

10. Procédé selon l'une quelconque des revendications 7 à 9, **caractérisé en ce qu'**il consiste dans l'étape iii) à localiser la cible (C) dans la zone de sécurité (Z) de manière précise par des paramètres de localisation ou en identifiant, parmi un ensemble de subdivisions (Z1, Z2, Z3) prédéfini de la zone de sécurité (Z), la subdivision (Z1, Z2, Z3) dans laquelle la cible (C) a été détectée.

11. Procédé selon la revendication 10, **caractérisé en ce que** l'ensemble de subdivisions (Z1, Z2, Z3) est composé de deux ou trois subdivisions de zone s'étendant parallèlement à l'axe longitudinal (X) de la machine (M).

12. Procédé selon l'une quelconque des revendications 7 à 11, **caractérisé en ce que** le ou chaque élément d'intervention (3) agit sur la cible (C) pour racler, écrêter, aplanir, répartir ou étaler le produit (P) sur la surface du sol (S) sans être en contact avec le sol (S) lors de l'opération.
